# EUROPEAN PATENT APPLICATION

(11) **EP 2 204 139 A1**
(43) Date of publication of application: **07.07.2010**
(21) Application number: 09157402.0
(22) Date of filing: 06.04.2009
(51) Int. Cl.: A61C 15/02, A61C 15/00

(54) **Hook-type toothpick and interdental brush having the same**

(30) Priority: 05.01.2009 WO PCT/KR2009/000021
(71) Applicant: Kim, Tae Jin, Middletown, CT 06459-1101 (US)
(72) Inventor: Kim, Tae Jin, Middletown, CT 06459-1101 (US)
(74) Representative: Caspary, Karsten

(57) **Abstract**

A hook-type toothpick and an interdental brush having the same are provided. The hook-type toothpick includes a body part, and a hook part. The body part provides a handle that is held by fingers. The hook part has a curvature radius so as to be able to reach the backside of a tooth when one side of the body part enters into the oral cavity from the front of a mouth, and is connected with the body part.

## Description

### [Technical Field]

The present invention relates to a toothpick and an interdental brush having the toothpick and, more particularly, to a toothpick that can remove food residue caught in gaps between teeth, and an interdental brush having the toothpick.

### [Background Art]

Generally, a toothpick includes sharp points which are inserted between teeth to easily remove food residue caught between the teeth, and a holding rod which provides a handle enabling a user to manipulate the sharp points in the desired direction and at the desired position. In greater detail, the sharp points are formed at respective ends of the holding rod, which functions as the handle, and are also formed to have a tapered shape in order to deal with the difference in thickness between the sharp points and the handle.

However, only at the part of the toothpick which is close to one of its ends can the sharp point be inserted between the teeth, so that a user may often experience difficulties in removing the food residue caught between the teeth. Furthermore, when the toothpick is repeatedly used, the sharp points and the tapered portions cause the teeth to become widened, so that the arrangement of the teeth may be negatively influenced. Furthermore, the toothpick is formed to have a rectilinear shape, so that it is difficult to remove, in particular, food residue caught between the molar teeth arranged inside the oral cavity.

In order to solve these problems, a plurality of toothpicks, each of which has a handle structure so as to facilitate the insertion and manipulation of sharp points, have been disclosed. However, the above-described toothpicks have complicated structures, so that they are suitable for articles that are repeatedly used, rather than for articles for one-time use. Furthermore, even in the case where the sharp points of each toothpick are formed to have a predetermined thickness, the toothpicks are easily broken due to the step difference between the sharp points and the holding rod of each toothpick, so that a problem occurs in that the toothpicks may cause greater inconvenience to users.

### [Disclosure]

### [Technical Problem]

Accordingly, the present invention has been made keeping in mind the above problems occurring in the prior art, and an object of the present invention is to provide a hook-type toothpick, which can remove effectively and easily food residue caught between teeth without adversely affecting the arrangement of the teeth, and which has a simple structure that can be used as an article for one-time use, and an interdental brush having the toothpick.

### [Technical Solution]

In order to accomplish the above object, the present invention provides a hook-type toothpick, including: a body part providing a handle that is held by fingers; and a hook part having a curvature radius so as to be able to reach the backside of a tooth when one side of the body part enters into the oral cavity from the front of a mouth, and connected with the body part.

It is preferred that the hook part include a first hook, which is formed to protrude from the hook connection portion of the body part in the direction perpendicular to the extending direction of the hook connection portion of the body part, to which the hook part is connected, and which is formed to be bent in a direction parallel to the hook connection portion of the body part so as to provide a sharp point.

Furthermore, it is preferred that the hook part further include a second hook, which is formed to protrude from the hook connection portion of the body part in the direction opposite that of the first hook, and/or is formed to be bent in the direction opposite that of the first hook so as to provide a sharp point.

Furthermore, it is preferred that the first hook and the second hook be formed together at an identical location on the body part.

Furthermore, it is preferred that the first hook and the second hook be separately formed on respective first and second ends of the body part.

Furthermore, it is preferred that the first hook and the second hook be alternately formed so as to be spaced apart from each other by predetermined distances in the longitudinal direction of the body part.

It is preferred that the body part have a gently curved shape.

Furthermore, it is preferred that the body part have a curved shape by forming the first and second ends of the body part so as to have different curvatures or curvature radii and different bent directions.

Furthermore, it is preferred that the hook part includes a first hook part, which has a curvature radius that corresponds to a curvature or curvature radius and the bent direction of the first end of the body part and is connected to the first end of the body part, and a second hook part, which has a curvature radius that corresponds to a curvature or curvature radius and the bent direction of the second end of the body part and is connected to the second end of the body part.

Furthermore, it is preferred that the first hook part or the second hook part include a first hook, which is formed to protrude from the hook connection portion of the body part in the direction perpendicular to the extending direction of the hook connection portion of the body part, to which the hook part is connected, and which is formed to be bent in the direction parallel to the hook connection portion of the body part so as to provide a sharp point, and a second hook, which is formed to protrude from the hook connection portion of the body part in the direction opposite that of the first hook, and/or which is formed to be bent in the direction opposite to that of the first hook so as to provide a sharp point.

Furthermore, it is preferred that the body part include an inclined cut surface, which is formed in the body part in the direction opposite the protruding direction of the hook part so as to be inclined downwards at a location spaced apart from the hook part, and which is formed such that the hook part is accurately cut at a predetermined cutting position of the inclined cut surface when the hook part is removed from the body part.

Furthermore, it is preferred that the hook-type toothpick be made of biodegradable resin.

Furthermore, it is preferred that the hook-type toothpick be formed by extruding or injection molding biodegradable synthetic polymer molten material, in which one or more mixtures selected from among a group of PCL (polyε -caprolactone), PLA (polylactic acid), Diol/Diacid-based Aliphatic polyester, PG (polyglycolic acid), Polyphosphate ester and Polyphosphazene, are used as a raw material.

In addition, the present invention provides an interdental brush, including: a handle part; a toothbrush part connected to one side of the handle part so as to be inserted between teeth by manipulating the handle part, and configured such that food residue caught between the teeth can be pushed or collected by an advancing and retreating motion thereof; and a toothpick part having a hook-type toothpick structure based on any one of claims 1 to 3, and connected to the toothbrush part.

### [Advantageous Effects]

The present invention, which has been made keeping in mind the above problems occurring in the prior art, not only can easily remove food residue which is caught in the front interdental portions of the teeth, from outside of the oral cavity, but can also easily remove plaque or food residue which is caught in the backside portion of the molar teeth or foreteeth that are located in the oral cavity, using the hook part, which has a curvature radius so as to be able to reach the backside of the molar teeth.

Accordingly, the present invention is implemented so as to effectively remove food residue caught between the teeth without adversely affecting the arrangement of the teeth and to have a simple structure that can be used as an article for one-time use, thus being applicable to all of the application fields of existing toothpicks while replacing the existing toothpicks.

Furthermore, the shape and position of the hook part, the number of hooks, and the shape of the body part that provides a handle can be implemented according to various embodiments, and thus a relatively appropriate toothpick can be adopted and applied according to a user's convenience or preference, a structure of oral cavity, and an arrangement of teeth. Furthermore, as the number of ends of the toothpick is increased in proportion to the number of hooks, the toothpick according to the present invention can be used a multitude of times as compared to existing toothpicks whose two ends can each be used only once.

Furthermore, when the hook-type toothpick is made of biodegradable resin, an eco-friendly characteristic depending on increased degradation speed is imparted thereto. In addition, even though the biodegradable material comes into contact with a human body or is imbibed, safety and health problems which have conventionally occurred due to contact being made with and intake of existing artificial compounds, such as skin stimulation, accumulation in the body or the generation of cancer, do not occur, due to the eco-friendly biodegradable characteristic. Accordingly, the present invention can be safely used by anyone, including infants, the aged and patients.

### [Description of Drawings]

FIG. 1 is a perspective view showing a hook-type toothpick according to a first embodiment of the present invention;
FIGS. 2 (a) to 2(f) are front views showing various modifications of the hook-type toothpick according to the first embodiment of the present invention;
FIGS. 3 (a) to 3(d) are front views showing various hook-type toothpicks, which differ from the hook-type toothpicks shown in FIGS. 1 and 2(a) to 2(f);
FIGS. 4 (a) to 4(d) are front views showing various other hook-type toothpicks, which differ from the hook-type toothpicks shown in FIGS. 1, 2(a) to 2(f) and 3(a) to 3(f);
   and
FIG. 5 is a perspective view showing an interdental brush according to a first embodiment of the present invention.

**<Description of characters of principal elements>**

| | | | |
|---|---|---|---|
| 110: | body part | 113: | inclined cut surface |
| 120: | hook part | 120a: | first hook part |
| 120b: | second hook part | 121: | first hook |
| 122: | second hook | 210: | handle part |
| 220: | toothbrush part | 230: | toothpick part |

### [Mode for Invention]

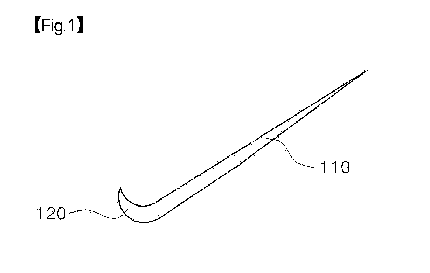

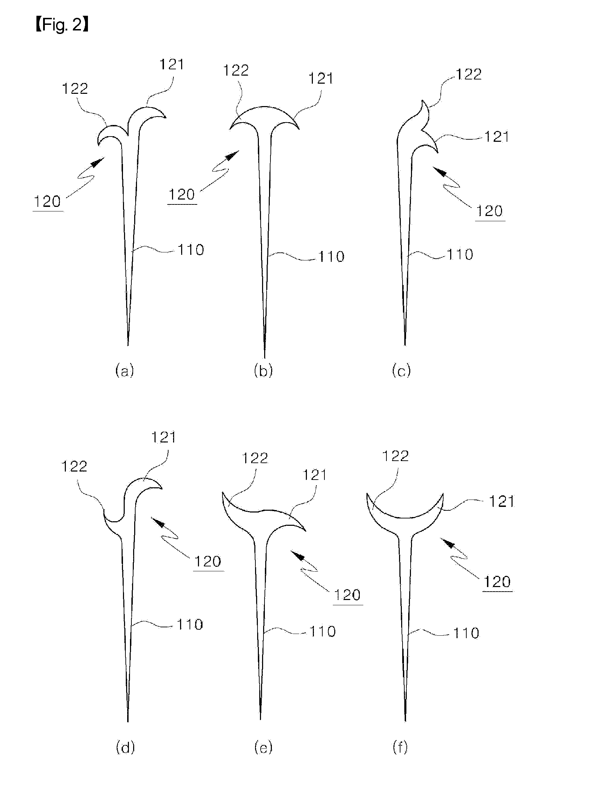

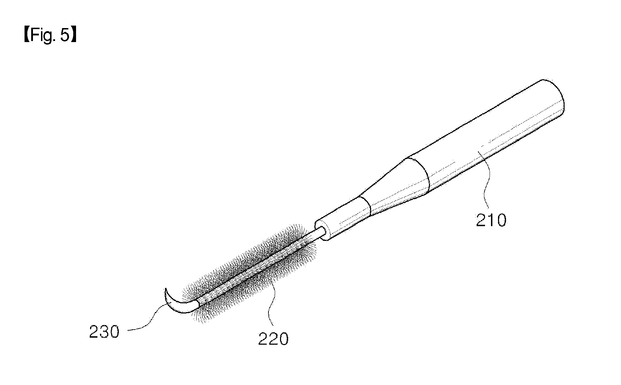

FIG. 1 is a perspective view showing a hook-type toothpick according to a first embodiment of the present invention, FIGS. 2 (a) to 2(f), 3(a) to 3(d), and 4(a) to 4(d) are front views showing various modifications of the hook-type toothpick of the first embodiment of the present invention, and FIG. 5 is a perspective view showing an interdental brush according to a first embodiment of the present invention.

As shown in FIGS. 1 to 4, each of the hook-type toothpicks according to the present invention includes a body part 110 and a hook part 120. The body part 110 provides a handle that can be held by fingers. The hook part 120 has a curvature radius so as to be able reach the backside of the teeth when one side of the body part 110 enters into the oral cavity from the front of the mouth, and is connected with the body part 110.

In the embodiment shown in FIG. 1, the body part 110 is formed to have a rectilinear shape. The hook part 120 is formed to protrude from a first end portion of the body part 110 in the direction perpendicular to the extending direction of the body part 110, and is formed to be bent in the direction parallel to the body part 110 so as to provide a sharp point. A second end portion of the body part 110 has a tapered shape, so that a sharp point is formed at the end of the body part 110.

In the above-described construction, food residue caught in the outer interdental portions of the teeth and in the front interdental portions of the teeth, can be easily removed from the outside of the oral cavity or from the front of the teeth using the sharp point formed in the second end portion of the body part 110 by applying the usage of existing toothpicks. In addition, food residue that is caught in the inner interdental portions of the teeth and in the backside interdental portions of the teeth can be easily removed from both the inside of the oral cavity or from the backside of the teeth using the hook part 120 formed in the first end of the body part 110.

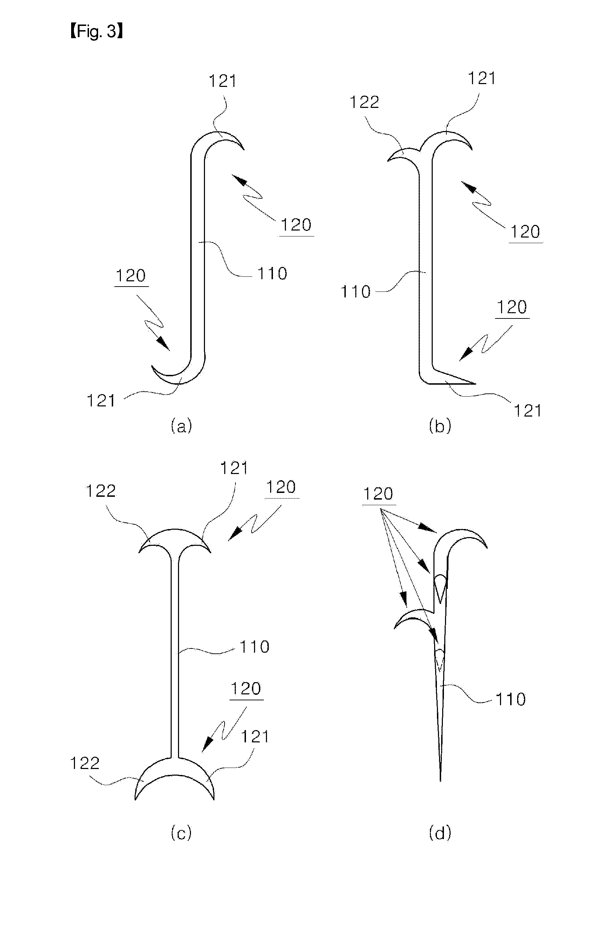

In the embodiments shown in FIGS. 2(a) to 2(f) and FIGS. 3(a) to 3(d), the hook part 120 includes a plurality of hooks, that is, a first hook 121 and a second hook 122. The hook part 120 has a structure in which the hooks are formed to extend from the body part 110 in opposite directions.

The first hook 121 is formed to protrude from a hook connection portion of the body part 110 in the direction perpendicular to the extending direction of the hook connection portion of the body part 110, to which the hook part 120 is connected, and is formed to be bent in the direction parallel to the hook connection portion of the body part 110 so as to provide a sharp point. The second hook 122 is formed to protrude from the hook connection portion of the body part 110 in the direction opposite that of the first hook 121, and is formed to be bent in the direction opposite to that of the first hook 121 so as to provide a sharp point.

In the description of the present invention, the hook connection portion of the body part 110 means the entire one side of the body part 110, to which the connection of the hook part 120 is made in the longitudinal direction of the body part 110, rather than meaning a narrow point, from which the vertical protrusion of the hook part 120 from an outer surface of the body part 110 is started.

FIGS. 2 (a) to 2(f) are shown to describe various embodiments, in which the first and second hooks 121 and 122 are formed at the same location (on the hook connection portion) in the longitudinal direction of the body part 110, in particular, in which the first and second hooks 121 and 122 are formed to protrude or to be bent in opposite directions while being formed together on the first end of the body part 110.

In the case where, as shown in FIGS. 2(a) and 2(b), the first and second hooks 121 and 122 are formed to protrude and to be bent in opposite directions, food residue that is caught in the interdental portions of the upper teeth can be removed using the second hook 122 and, then, food residue that is caught in the interdental portions of the lower teeth can be removed using the first hook 121 through an easy manipulation, by which the first hook 121 is moved from the upper teeth side to the lower teeth side without any separate manipulation such as rotating the body part 110 or changing the direction of the body part 110.

Generally, the upper teeth protrude to the front of the lower teeth. Accordingly, in the case where, as shown in FIG. 2(a), the first hook 121 is formed to extend from the end of the body part 110 more than the second hook 122 does, the line of movement of the first hook 121 is minimized when the upper and lower teeth are treated using the respective second and first hooks 122 and 121. As a result, the treatment can be more conveniently performed.

In the case where, as shown in FIG. 2(b), the first and second hooks 121 and 122 are connected to each other so as to form a smooth curved surface without requiring that any groove be formed between the first and second hooks 121 and 122, the first and second hooks 121 and 122 can be connected to the body part 110 with a more firm stiffness. In addition, food residue that is shrink-fitted into the interdental portions of the teeth can be effectively removed using both the shape and high stiffness of a curved surface part, whereat the first and second hooks 121 and 122 are connected to each other.

When the upper and lower teeth are separately treated in the case where, as shown in FIG. 2(c), the first and second hooks 121 are configured so as to protrude in the same direction and to be bent in opposite directions, the front interdental portions of the teeth can be treated using the second hook 122 and, then, the backside interdental portions of the teeth can be treated using the first hook 122 through an easy manipulation, by which the first hook 121 is located in the oral cavity using the body part 110 without any separate manipulation such as rotating the body part 110 or changing the direction of the body part 110.

In the case where, as shown in FIG. 2(d), the sharp point of the first hook 121 and the sharp point of the second hook 122 are oriented in opposite directions, rather than oriented in parallel directions, the first hook 121 is used at interdental locations at which the treatment is easily made using the sharp point of the first hook 121, while the second hook 122 is used at interdental locations at which the treatment is easily made using the sharp point of the second hook 122. Accordingly, food residue that is caught between variously shaped and oriented teeth can be effectively removed using a single toothpick.

In the case where, as shown in FIG. 2(e), the first and second hooks 121 and 122 are bent in opposite directions, the backside interdental portions of the teeth can be treated using the first hook 121. In addition, the front interdental portions of the teeth can be treated using the second hook 122 after the body part 110 is rotated such that the second hook 122 is located in front of the corresponding teeth.

In the case where, as shown in FIG. 2(f), the sharp points of the first and second hooks 121 and 122 are formed parallel to each other, the front interdental portion of the teeth can be treated using the second hook 122 that is relatively short in the state in which an interdental portion of the teeth is located between the first and second hooks 121 and 122, and then the backside interdental portion of the teeth can be treated using the first hook 121, which is relatively long and is placed inside the oral cavity, without any separate manipulation such as rotating the body part 110, changing the direction of the body part 110, or moving the body part 110.

FIGS. 3(a) to 3(d) are shown to describe various embodiments, in which a single sharp point is provided as shown in FIG. 1, or in which two or more hook parts 120, each of which includes a first hook 121 and/or a second hook 122, are separately formed on respective first and second ends of a body part 110 or are alternately formed so as to be spaced apart from each other in the longitudinal direction of the body part 110 as shown in FIG. 2.

In the case where, as shown in FIG. 3(a), the hook parts 120, each having a single sharp point that corresponds to the first hook 121 as shown in FIG. 1, are formed on both ends of the body part 110, the first hooks 121 are located so as to be spaced far apart from each other. Accordingly, when the first hook part 120 is used, there is no possibility of the second hook part 120 injuring a portion of the oral cavity. As a result, the backside interdental portions of the teeth can be safely treated by selectively using the hook parts 120, which are formed on the respective first and second ends of the body part 110.

In the case where, as shown in FIG. 3(b), a hook part 120, which includes a first hook 121 and a second hook 122, is connected to a first end of a body part 110, and another hook part 120, which has a structure that corresponds to the first hook 121, is connected to a second end of the body part 110, the first and second hooks 121 and 122 can be conveniently used while being selectively applied according to the distance they are spaced apart from each other. As a result, the backside portions of the teeth can be safely treated.

In the case where, as shown in FIG. 3(c), a hook part 120, which includes a first hook 121 and a second hook 122 and is configured as shown in FIG. 2(b), and another hook part 120, which includes a first hook 121 and a second hook 122 and is configured as shown in FIG. 2(f), are formed on respective first and second ends of a body part 110, the working effects, which are described in the detailed description of the embodiment shown in FIG. 2(b), and the working effects, which are described in the detailed description of the embodiment shown in FIG. 2(f), can be selectively achieved by manipulation, such as changing the direction of the body part 110 as needed.

The present invention is not limited only to the case where a plurality of hooks, including the first hook 121 and the second hook 122, is formed on the first and second ends of a body part 110, so that the hook part 120 may be formed at an arbitrary location in the intermediate portion of the body part 110. In the case where, as shown in FIG. 3(d), a plurality of hook parts 120 protrude in different directions from each other and are formed so as to be arranged and spaced apart from each other by predetermined distances in the longitudinal direction of the body part 110, a plurality of hook-type sharp points may be provided in proportion to the number of hook parts 120.

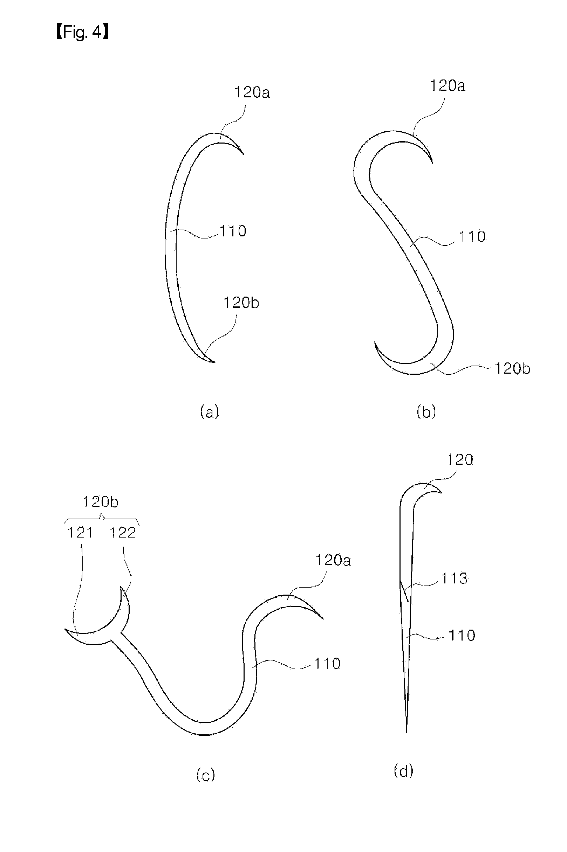

The body part 110, which provides a handle that enables a manipulation force to be transmitted to the hook part 120, may be formed to have a rectilinear shape as shown in FIGS. 1 to 3, but it is preferred that the body part 110 be formed to have a gently curved shape as shown in FIGS. 4 (a) to 4(c).

In the case where the body part 110 is formed so as to have a curved shape as shown in FIGS. 4 (a) to 4(c), a portion of the body part 110 can reach the backside of the teeth. Accordingly, when the hook parts 120 are formed on the first or second end of the body part 110, the hook parts 120 can be formed to have a gently curved shape relative to a rectilinear shape. As a result, more reliable stiffness can be realized over the entire length of the toothpick.

When the hook parts 120 are formed on the first and second ends of the body part 110 in the case where the first and second ends of the body part 110 have different curvatures or curvature radii and are bent in different directions, the hook parts 120 may be constructed using both a first hook part 120a which has a curvature radius that corresponds to the curvature or curvature radius and the bent direction of the first end of the body part 110 and is connected to the first end of the body part 110, and a second hook part 120b which has a curvature radius that corresponds to the curvature or curvature radius and the bent direction of the second end of the body part 110 and is connected to the second end of the body part 110. In this case, the body part 110 and the hook parts 120 are formed to have overall hook shapes, and thus the above-described working effect can be easily realized.

Furthermore, various toothpicks can be implemented so as to have the shape of the letter 'C' of the alphabet as shown in FIG. 4(a), the shape of the letter 'S' of the alphabet as shown in FIG. 4(b), and the shape of a fish as shown in FIG. 4(c), which differ from a typical rectilinear shape. As a result, in addition to a function of merely treating food residue, various designs that impart a sense of closeness to a user can be realized and applied.

In the case where, as shown in FIG. 4(d), an inclined cut surface 113 is formed in a body part 110 in the direction opposite the protruding direction of a hook part 120 so as to be inclined downwards at a location spaced apart from the hook part 120, the outer portion of the body part 110, which is located outside the inclined cut surface 113, reliably supports the pressure that is applied to the body part 110 when the hook part 120 is used. As a result, the sensation when being used is not detracted from.

Furthermore, the inclined cut surface 113 is formed such that the hook part 120 is accurately cut at the predetermined cutting position of the inclined cut surface 113 when the hook part 120 is removed from the body part 110. Accordingly, after the hook part 120 is used, the contaminated hook part 120 can be easily removed and, in addition, a new sharp point that corresponds to the shape of the inclined cut surface 113 can be provided.

The hook-type toothpick according to the present invention may be made of natural material or metal, or may be made of synthetic resin, which is generally used to manufacture dental floss, but it is preferred that the hook-type toothpick be manufactured by extruding or injection molding biodegradable synthetic polymer molten material, in which one or more mixtures selected from among the group of PCL (polyε -caprolactone), PLA (polylactic acid), Diol/Diacid-based Aliphatic polyester, PG (polyglycolic acid), Polyphosphate ester and Polyphosphazene, are used as a raw material.

When the hook-type toothpick is made of biodegradable resin as described above, an eco-friendly characteristic depending on increased degradation speed is imparted thereto. In addition, even should the biodegradable material come into contact with a human body or be taken in, safety and health problems which have conventionally occurred due to contact being made with and intake of an artificial compound, such as skin stimulation, accumulation in the body or the generation of cancer, do not occur, due to the eco-friendly biodegradable characteristic. Accordingly, the hook-type toothpick according to the present invention can be reliably used for medical treatment, experimentation and applying makeup, and can be reliably used on infants and the aged.

The hook-type toothpick according to the present invention may be implemented so as to have an elasticity or flexibility suitable for the purpose for which it is used by adjusting and applying the composition of polymer, lubricant and emulsifying agent, which are added to the above-described biodegradable resin. Furthermore, the hook-type toothpick according to the present invention may be implemented so as to have a fine size, corresponding to a micro size, by injection molding or extruding molten material, in which the biodegradable synthetic polymer is used as a raw material, into a fiber shape.

The technical gist herein is different from that of the hook-type toothpick, and the present invention provides an interdental brush, to which the hook-type toothpick constructed as described above is applied. The interdental brush according to the present invention includes a handle part 210, a toothbrush part 220, and a toothpick part 230.

The handle part 210 is configured so as to provide a handle that can be held by the fingers or a hand. The toothbrush part 220 is connected to one side of the handle part 210 so as to be inserted between the teeth by manipulating the handle part 210, and is configured such that food residue caught between the teeth can be pushed or collected by an advancing and retreating motion thereof.

The handle part 210 and the toothbrush part 220 are not limited to specific structures and shapes and it is preferred that the handle part 210 be implemented using a technology that is appropriately selected from among technologies that are well known in the interdental brush industry, and thus the detailed description thereof is omitted. The structure and working effects of the toothpick part 230 are the same as those of the hook-type toothpick according to the present invention, and thus the repeated description thereof is omitted.

The hook-type toothpick according to the present invention, and the interdental brush having the same, not only can easily remove food residue which is caught in the front interdental portions of the teeth, from outside of the oral cavity, but can also easily remove plaque or food residue which is caught in the backside portion of the molar teeth or foreteeth that are located in the oral cavity, using the hook part 120, which has a curvature radius so as to reach the backside of the molar teeth.

Accordingly, the present invention is implemented the present invention is implemented so as to effectively remove food residue caught between the teeth without adversely affecting the arrangement of the teeth and to have a simple structure that can be used as an article for one-time use, thus being applicable to all of the application fields of existing toothpicks while replacing the existing toothpicks.

Furthermore, the shape and position of the hook part 120, the number of hooks, and the shape of the body part 110 that provides a handle can be implemented according to various embodiments, and thus a relatively appropriate toothpick can be adopted and applied according to a user's convenience or preference, a structure of oral cavity, and an arrangement of teeth. Furthermore, as the number of ends of the toothpick is increased in proportion to the number of hooks, the toothpick according to the present invention can be used a multitude of times as compared to existing toothpicks whose two ends can each be used only once.

Furthermore, when the hook-type toothpick is made of biodegradable resin, an eco-friendly characteristic depending on increased degradation speed is imparted thereto. In addition, even though the biodegradable material comes into contact with a human body or is imbibed, safety and health problems which have conventionally occurred due to contact being made with and intake of existing artificial compounds, such as skin stimulation, accumulation in the body or the generation of cancer, do not occur, due to the eco-friendly biodegradable characteristic. Accordingly, the present invention can be safely used by anyone, including infants, the aged and patients.

Although preferred embodiments of the present invention have been described above, the present invention is not limited to the embodiments, and it should be understood as a technology that can be modified in accordance with the accompanying claims and the detailed description and used by those skilled in the art, and also embodiments in which the embodiments of the present invention are merely combined with existing well-known technologies, are naturally included in the scope of the present invention.

## Claims

1. A hook-type toothpick, comprising:
a body part (110) providing a handle that is held by fingers; and
a hook part (120) having a curvature radius so as to be able to reach a backside of a tooth when one side of the body part (110) enters into an oral cavity from a front of a mouth, and connected with the body part (110).

2. The hook-type toothpick according to claim 1, wherein the hook part (120) comprises:
a first hook (121), which is formed to protrude from a hook connection portion of the body part (110) in a direction perpendicular to an extending direction of the hook connection portion of the body part (110), to which the hook part (120) is connected, and which is formed to be bent in a direction parallel to the hook connection portion of the body part (110) so as to provide a sharp point.

3. The hook-type toothpick according to claim 2, wherein the hook part (120) further comprises:
a second hook (122), which is formed to protrude from the hook connection portion of the body part (110) in a direction opposite that of the first hook (121), and/or is formed to be bent in the direction opposite that of the first hook (121) so as to provide a sharp point.

4. The hook-type toothpick according to claim 3, wherein the first hook (121) and the second hook (122) are formed together at an identical location on the body part (110).

5. The hook-type toothpick according to claim 3, wherein the first hook (121) and the second hook (122) are separately formed on respective first and second ends of the body part (110).

6. The hook-type toothpick according to claim 1, wherein the first hook (121) and the second hook (122) are alternately formed so as to be spaced apart from each other by predetermined distances in a longitudinal direction of the body part (110).

7. The hook-type toothpick according to claim 1, wherein the body part (110) has a gently curved shape.

8. The hook-type toothpick according to claim 7, wherein the body part (110) has a curved shape by forming first and second ends of the body part (110) so as to have different curvatures or curvature radii and different bent directions.

9. The hook-type toothpick according to claim 8, wherein the hook part (120) comprises:
a first hook part (120a), which has a curvature radius that corresponds to a curvature or curvature radius and a bent direction of a first end of the body part (110) and is connected to a first end of the body part (110); and
a second hook part (120b), which has a curvature radius that corresponds to a curvature or curvature radius and a bent direction of a second end of the body part (110) and is connected to a second end of the body part (110).

10. The hook-type toothpick according to claim 9, wherein the first hook part (120a) or the second hook part (120b) comprises:
a first hook (121), which is formed to protrude from a hook connection portion of the body part (110) in a direction perpendicular to an extending direction of the hook connection portion of the body part (110), to which the hook part (120) is connected, and which is formed to be bent in a direction parallel to the hook connection portion of the body part (110) so as to provide a sharp point; and
a second hook (122), which is formed to protrude from the hook connection portion of the body part (110) in a direction opposite that of the first hook (121), and/or which is formed to be bent in the direction opposite to that of the first hook (121) so as to provide a sharp point.

11. The hook-type toothpick according to claim 1, wherein the body part (110) comprises:
an inclined cut surface (113), which is formed in the body part (110) in a direction opposite a protruding direction of the hook part (120) so as to be inclined downwards at a location spaced apart from the hook part (120), and which is formed such that the hook part (120) is accurately cut at a predetermined cutting position of the inclined cut surface (113) when the hook part (120) is removed from the body part (110).

12. The hook-type toothpick according to claim 1, wherein the hook-type toothpick is made of biodegradable resin.

13. The hook-type toothpick according to claim 12, wherein the hook-type toothpick is formed by extruding or injection molding biodegradable synthetic polymer molten material, in which one or more mixtures selected from among a group of PCL (polyε -caprolactone), PLA (polylactic acid), Diol/Diacid-based Aliphatic polyester, PG (polyglycolic acid), Polyphosphate ester and Polyphosphazene, are used as a raw material.

14. An interdental brush, comprising:
a handle part (210);
a toothbrush part (220) connected to one side of the handle part (210) so as to be inserted between teeth by manipulating the handle part (210), and configured such that food residue caught between the teeth can be pushed or collected by an advancing and retreating motion thereof; and
a toothpick part (230) having a hook-type toothpick according to any one of claims 1 to 3, and connected to the toothbrush part (220).
